(19) Europäisches Patentamt
European Patent Office
Office européen des brevets

(11) **EP 4 273 898 A1**

(12) **EUROPEAN PATENT APPLICATION**

(43) Date of publication:
**08.11.2023 Bulletin 2023/45**

(21) Application number: **22171824.0**

(22) Date of filing: **05.05.2022**

(51) International Patent Classification (IPC):
*H01G 11/48* (2013.01)    *H01G 11/02* (2013.01)
*H01G 11/86* (2013.01)    *H01G 11/56* (2013.01)
*H01G 11/46* (2013.01)    *C04B 12/00* (2006.01)
*C04B 28/00* (2006.01)    *H01G 11/30* (2013.01)

(52) Cooperative Patent Classification (CPC):
**H01G 11/86; C04B 7/02; C04B 12/005;**
**C04B 14/024; C04B 14/06; C04B 14/386;**
**C04B 18/08; C04B 18/146; C04B 28/006;**
**H01G 11/02; H01G 11/30; H01G 11/46;**
**H01G 11/56;** C04B 22/062; C04B 22/10;    (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **KayHan Swiss GmbH**
**8001 Zurich (CH)**

(72) Inventor: **NOVIN VAJARI, Sina**
**Vajargah city, Postal code: 4489133775 (IR)**

(74) Representative: **Felber, Josef et al**
**Felber & Partner AG**
**Dufourstrasse 116**
**8008 Zürich (CH)**

(54) **POLYMER SYNTHETIC STONES WITH THE ABILITY POLYMER SYNTHETIC STONTES WITH THE ABILITY TO STORE ELECTRICAL ENERGY, AND THEIR MANUFACTURING**

(57)    The invention discloses a synthetic stone can be used for electrical energy storage such as a supercapacitor, and a preparation method thereof. According to this invention, geopolymer (11) and cement (12) are being taken as materials for an electrolyte. A supercapacitor of the present invention comprises a geopolymer (11) and cement matrix (1) and a positive and negative steel electrode (2, 3), whereby the steel electrodes (2, 3) are arranged in the matrix (1), and the matrix (1) is prepared from conductive mortar. The conductive mortar (1) comprises fly ash, cement (12), gravel and sand, alkali activator (KOH and $SiO_2$) (13), and some additives (14) of synthetic stone compounds such as poly carboxylate ether, retarder, lignosulfonate, ethylene-vinyl acetate, hydroxypropyl methyl cellulose, pigment and carbon black. This supercapacitor synthetic stone is simple in structure and is based on a particular formulation.

Fig. 2

EP 4 273 898 A1

**(Cont. next page)**

(52) Cooperative Patent Classification (CPC): (Cont.)
C04B 24/2647; C04B 24/383; C04B 28/02;
C04B 28/04

## Description

### Technical field

The present invention relates to synthetic stones as electrical energy storage. It invention does also disclose a method for manufacturing and using such synthetic stones as electrical energy storage. Thus, the present invention relates to a method capable of manufacturing synthetic stones and to use them as capacitors and batteries so that a new combination of synthetic stones in the form of mortar can be used as an electrolyte and two steels as electrodes in said method. The method is both practical and cost-effective.

### Background technique

In the future, structural materials will take on additional functions such as collection and storing power from solar and wind renewable energy. This function will not only improve the energy efficiency of such structures but also enable better the management of excess energy by feeding it to the grid to reduce energy peak demands or using it to power auxiliary systems such as lighting posts, traffic lights, advertising boards, electric vehicle charging stations and structural health monitoring sensors etc. The development of a novel battery is necessary in order to reduce the cost of fuel and preventing or lower environmental pollution.

Capacitors offer high power density but limited energy density. Concrete, after water, is the world's most used material. Researchers have been exploring the idea of using concrete to store electricity essentially making buildings that act as giant batteries. Cement is a dielectric material that contains water. In cement, water is present both inside and outside the silicate hydrate crystals. Electrolytes are ionic dielectric materials that conduct electricity through the movement of ions. In other words, an electrolyte is an electronic insulator, but is an ionic conductor. A battery consists of an anode, that is an electrode which is an electronic conductor and which undergoes chemical oxidation during the discharge of the battery, and a cathode, that is an electrode which is an electronic conductor and which undergoes chemical reduction during the discharge of the battery. These two electrodes are separated by an electrolyte. During discharge, a voltage appears between the anode and the cathode.

In general, the idea of rechargable batteries is gaining ground as many places come to increasingly rely on renewable energy from the wind and the sun. Rechargeable batteries are then necessary when winds die down or darkness falls, but so far, they are often made of toxic substances that are far from environmentally friendly. For this purpose, it is recommended to use environmentally friendly materials instead.

Experimental concrete batteries have managed to hold only a small fraction of what a traditional battery does. To this end, efforts to increase the capacity of batteries and supercapacitors are the subject of discussion by many researchers. Research into electrical energy storage in civil engineering structures remains scarce and only a few concepts of cement-based structural electrical energy storage systems have been proposed to date. These cement-based energy storage systems use the pore solution in the cement as electrolyte and cement with additives such as graphene, black carbon, zinc and magnesium dioxide as electrodes. The cement-based battery concept can be extended from cement to concrete by the addition of aggregates. Concrete refers to cement that is filled with aggregates. Although the aggregates do not take part in the electrochemical reactions, they are conventionally used in cement-based structures for the purpose of mechanical reinforcement, drying shrinkage reduction and cost decrease. The presence of aggregate(s) in the cement-based electrolyte is expected to cause the thickness of the electrolyte layer to increase. But the thickness increase is not desirable, since it will result in a higher resistance in the electrolyte layer in the direction perpendicular to the layer and this resistance contributes to the overall battery resistance.

As major factories and industries are heavily dependent on fossil fuels to function, it is imperative and mandatory that alternative sources of energy being explored and developed. A ground-breaking innovation in the field of engineering has been the introduction of cement based batteries. Turning concrete into a battery might sound like an impossible concept, but the technology behind the idea actually dates back to the early 20th century, when nickel and iron batteries were being developed as an alternative to heavy lead-acid batteries. Thomas Edison used the same approach to build a battery using nickel and iron as a potential solution for powering early automobiles. Though the battery could be recharged quickly, its large size and cost made it less practical than the internal combustion engine. Solid electrolytes have been studied in many years but, the process parameters affect their electrochemical properties and cost. Lead being a hazardous substance creates the need and demand to implement advanced health and safety conditions to work in, which in turn increases the overall construction costs. Fuel cells suffer from leakage and poor interface interaction. The root of all these problems arises due to inefficient electrolytic materials. An ideal electrolyte for batteries should offer high ionic conductivity and low electrical resistance. This is where the role of cement as an electrolyte comes into application. Cement is a low cost and easy to use electrolyte, owing to the pore solution present in alkali ions, which utilizes internal pores and micro cracks to move. Liquid electrolytes have comparatively better battery performance than solid electrolytes due to high ionic mobility and continuous electrode-electrolyte interface. However, the major complications with batteries which comprises of liquid electrolytes are the application of toxic constituents and their vulnerability to leaking during their operation. On the other hand, solid electrolytes are observed to have high ionic mobility with an increase in temperature, but such a feature may not be observed at room temperature.

Nearly 40% of the overall energy consumption of a society is consumed by residential and commercial buildings for heating and/or cooling and zero-energy buildings attract more and more attention of researchers. In the future, advanced structural materials used on a large scale are expected to provide new intelligent functions, such as building materials for energy storage and electricity storage to reduce pollution by chemical batteries. The use of an inexpensive and abundant material for batteries and supercapacitors enables the development of large storages. Cement-based batteries and supercapacitors that utilize a cement-based electrolyte have been disclosed by Burstein et al. In this kind of supercapacitors, two electrodes are immersed into the electrolyte, and two electrodes are separated by a ion permeable membrane which is an electronic insulation to prevent electrical contact. But there is currently no such supercapacitor made of an artificial stone.

**Object of the invention:**

The purpose of this invention is it to eventually change the structure of similar capacitors and batteries and approaching the stone structure for use in buildings. Another objective of this invention is it to increase the efficiencies and lifespans of batteries. In view of the information given above, the technical problem to be solved by the present invention is to provide a synthetic stone supercapacitor which no longer needs chemical supercapacitors and which can be used for building facades and other parts of buildings, and another object of the invention is it to provide a manufacturing process for manufacturing such synthetic stone supercapacitors which is simple, low cost and easy to prepare and execute.

**Technical Solution of the invention**

The technical problem is solved by a synthetic stone which comprises a geopolymer-cement matrix and two steel electrodes immersed in the electrolyte matrix of the geopolymer-cement matrix, hereby providing an electricity storage function. This geopolymer-based batteries are superior to cement-based batteries in performance.

The manufacturing of this synthetic stones comprises these steps:

A) Preparing of conductive mortar as a paste,
B) Placing two steel electrodes in the mold,
C) Pouring the conductive paste into the mold,
D) Curring the conductive paste for obtaining the solid synthetic stone supercapacitor.

**Detailed description**

In order to make the objectives, technical solutions and advantages of the present invention clearer, the present invention will be further described in detail below in conjunction with the accompanying drawings.
Shown is in:

Figure 1:    The typical process in alkaline batteries;

Figure 2:    A schematic diagram of the structure of a synthetic stone of the present invention.

Figure 3:    A sample of a suitable steel mesh as electrode;

Figure 4:    The steel mesh as electrode used for tests;

Figure 5:    Two steel meshes as anode and cathode embedded into a geopolymer-cement matrix in a mold container, seen from above;

Figure 6:    The two steel meshes as anode and cathode embedded into a geopolymer-cement matrix in a mold container seen from above at an angle.

**Technical Theory of Cementitious Composites Battery**

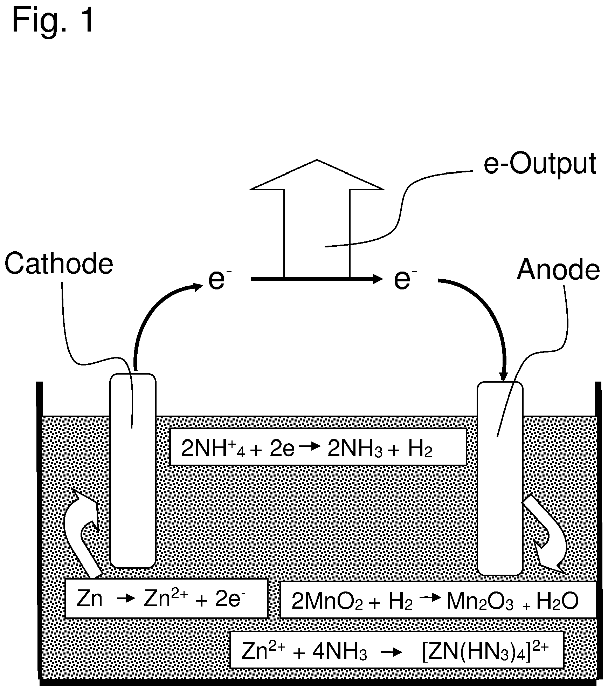

Conventional batteries are composed of an anode, cathode, and electrolyte as shown in **Figure 1.** In any battery, ions and electrons move through the electrolyte and the circuit from the anode to the cathode respectively. Typical alkaline batteries use zinc as the anode, manganese dioxide as the cathode and a salt solution as the electrolyte. The electrolyte's ionic conductivity should be high with a low electrical resistance thereby allowing it to carry high current. Liquid electrolytes traditionally perform better due to the high mobility of ions.

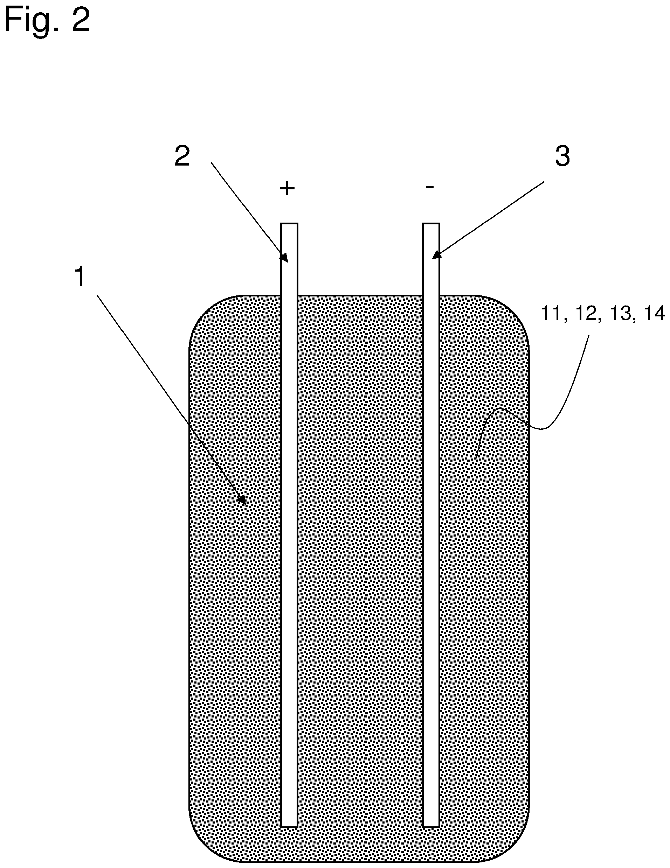

The cementitious composites battery is applied to these general concepts of batteries and is shown schematically in **Figure 2.** The conductivity is given to the concrete, so that the anode, the cathode, and the electrolyte are all made conductive. In these kind of batteries, zinc powder and manganese dioxide powder are used as the mineral admixture in anode and cathode to have battery function. Cement has ions from both the silicate and the water. The anode, cathode and electrolyte may be integrated by layer-by-layer pouring of the cement mixes and co-curing to form a monolithic structure that is a cement-based battery. As cement is the matrix in both anode and cathode and it is also the electrolyte, the anode active phase is in direct contact with the electrolyte throughout the anode region and the cathode active phase is in direct contact with the electrolyte throughout the cathode region - not just at a planar interface between an electrode and the electrolyte layer. Because the entire battery uses cement as the matrix, the interface between the electrolyte and the anode or cathode is intimate. Since the active component of the anode or cathode is in the form of particles that are surrounded by the cement matrix, which is an ionic conductor, the area of the interface between the electrolyte and the anode or cathode is large. In general, a large interface area is attractive for battery operation at a high current and for enhancing the thorough use of the active components during battery operation.

Cement-based batteries that utilize a cement-based electrolyte have been disclosed by Burstein and Speckert and Sakai et al. The use of an inexpensive and abundant material, such as cement, for batteries enables the development of large batteries. Furthermore, by incorporating the cement-based battery as a part of a structure, the battery does not consume extra and that potentially provides large amounts of energy. In other words, the battery becomes integrated with a structure.

The conventional capacitors have the ability to stock energy in electrical charge form. They produce voltage over the plates, which makes them similar to a small re-energized battery. A simple capacitor comprises two conducting plates made up of metal, electrically separated by insulating material. The insulation between the plates is known as a dielectric. Generally, capacitors are not preferred to store and provide a large amount of energy, as their energy density is less as compared to the batteries. However, they are very useful to fulfill short-duration power requirements, as their capability is very high as compared to the batteries. Electrodes play an important role in such a capacitor. Supercapacitor electrodes must have a high and ionically accessible surface area and good conductivity, as well as thermal and chemical stability.

**Geopolymer battery and supercapacitor**

Currently, there is a growing interest in combined monitoring and maintenance technologies, in particular through the application of 'smart cements'. These cements can act as repairs for concrete structures and simultaneously undergo measureable changes in electronic impedance in response to environmental conditions. Geopolymers are synthesized by mixing solid waste, e.g. rich alumino-silicate reactive materials such as ground granulated blast furnace slag (GGBFS) and fly-ashes with an alkaline activator, e.g. a strong alkaline solution such as NaOH or KOH, and then curing at room or high temperature. Geopolymers possess the following advantages over cement:

(a) low fuel consumption and CO2 emissions during manufacture;
(b) better mechanical properties;
(c) rapid hardening; and
(d) greater resistance to fire and acid attack.

Geopolymers have shown promise in energy storage field as they offer high durability, a versatile range of physical properties, and endurance to extreme environmental conditions. Over the years, geopolymers have been exploited as protective coating materials for marine concrete and transportation infrastructures. One of the challenges of applying geopolymers in the field, however, is that they are typically cured at elevated temperatures above 40 °C.

According to the present invention, the geopolymer-cement matrix is made of conductive mortar, the conductive mortar comprising fly ash, cement, gravel and sand, alkali activator (KOH and $SiO_2$). Some additives of synthetic stone compounds are being added such as one or more of a selection of poly carboxylate ether, retarder, lignosulfonate, ethylene-vinyl acetate, hydroxypropyl methyl cellulose and pigment. Carbon black can be added to the mortar in order to improve and increase the output, particularly as to current and longevity.

This mortar and this matrix utilize the pore solution in cement and geopolymer, and the pore aqueous solution contains a preset number of freely movable ions which can store energy.

The preparation for manufacturing such synthetic stones does involve these following steps,

A) Preparing of conductive mortar,
B) Placing two steel electrodes in the mold,
C) Pouring the conductive paste into the mold,
D) Curring for obtaining the solid synthetic stone supercapacitor.

The preparing of the conductive mortar in above step A can be done, by the below given detailed example, containing the indicated ingredients in the indicated ratio to each other:

A1) Preparing alkaline activator consisting of potassium silicate ($K_2SiO_3$) solution with $SiO_2$ = 7.98 grams, KOH = 9.21 grams and $H_2O$ = 15 grams,
A2) Preparing an additive solution containing poly carboxylate ether = 0.25 gram, retarder = 0.01 gram, lignosulfonate= 0.2 gram, ethylene-vinyl acetate = 0.2 gram, hydroxypropyl methyl cellulose = 0.1 gram and pigment = 0.5 gram. All additives are being stirred in 5 grams de-ionized water for 30 minutes,
A3) 1.44 g carbon black is sonicated with probe in water,
A4) The obtained solution is added to 20 grams of fly ash, 25 grams of cement and 5 grams of gravel and sand, then stirred evenly and then left standing quietly to obtain a mixed solution.

Advantageously, the steel electrodes 2, 3 are being placed in a rectangular mold 1 as shown in **figure 2**, and the distance between the positive electrode 2 and the negative electrode 3 is kept in the range of 8 mm.

The implementation of the present invention has the following beneficial effects: The matrix in the synthetic stone supercapacitor of the present invention contains a number of free ions. The pores in the mortar of this artificial stone carry ions to the electrodes and are a factor for energy storage. So this matrix can be a solid electrolyte and it can prevent electrical contact. These artificial stones can be connected to an external power supply to complete a charging, and later connected to an electrical appliance to complete a discharge. They can be used for building facades, thereby realizing an electricity storage function of the building material and saving a lot of energy.

According to this invention, geopolymeric cementitious composites are being used and formed by alkali activation of alumino silicate materials such as fly ash. In the chemical method of this invention, alkaline activators consist of a mixture of silicate ($SiO_2$) and potassium hydroxide (KOH). Depending on the Si/Al molar ratio, after reaction under controlled temperature, the resulting geopolymeric frameworks can be in the form of potassium-poly(sialate-siloxo) (KPSS) to create ionic conductivity in the mortar.

The synthetic stone supercapacitors offer a practical and cost-effective method for storing energy. They provide a green and environment-friendly power storage method, and they can be used for building facades and make it possible for the buildings to be more versatile. In addition, this kind of supercapacitors allow a building structure to deliver power on demand, so this demand does not have to rely totally on power at all times that is delivered from a distance. An intermediate storage is provided which can be charged in times of overproduction of electrical energy and from which energy can be drawn when there is a shortage.

The synthetic stone supercapacitor of the invention as presented above does offer, at a voltage of 1 volt, a capacity of 27 mF. With the connection of 3 such artificial stone supercapacitors in series, the voltage can be increased to 2 volts. Supercapacitors can be tested by Neware BTS4000 of Neware, Shenzhen in Chinam an advanced battery cycler and analyzer/tester. The capacitance of the capacitor is calculated as follows: Firstly, the ultra capacitor voltage's range should be set in Cycle Layer of Parameter Setting of the supercapacitor because the supercapacitance is calculated by sampling points. Calculate the voltage difference, Using Capacitance divide by the voltage difference, Multiply by 3600 seconds (the time unit of hours converted to seconds)

$$Super\ Capacitance\ (F) = \frac{Electric\ \ Charge(C)}{Voltage\ Difference(\Delta V)} = \frac{Current(A)*Time(s)}{Voltage\ Difference(\Delta V)}$$

$$= \frac{Capacitance\ (Ah)}{Voltage\ Difference(\Delta V)}*3600(s)$$

In summary, this rechargeable Nano-polymer artificial stone-based supercapacitor reaches an energy density of approximately 12-13 Wh/kg which is the equivalent of 0.013 KWh/kg), and this is the highest value ever achieved. The largest electric car batteries currently available store about 100 kilowatt hours. With a consumption of 15 to 25 kilowatt hours per 100 kilometres, electric vehicles such as the Tesla Model S/X, the Jaguar I-Pace or the Audi e-tron can travel between 400 and 600 kilometres on one battery charge. Consequently, it takes 7'692 kg of the rechargeable Nano-polymer artificial stone-based supercapacitor in order to store this amount of electrical energy. Generally, the weight of a brick wall of one meter hight is ranging between 190 kg to 440 kg per square meter, 190 kg for a tickness of 100 mm and 440 kg for a tickness of 230 mm. Take an outer wall of 230 mm thickness with a hight of 2.5 m. Such wall weighs 440 kg x 2.5 m per meter length, that is 1'100 kg/m. In other words. 7'692 kg : 1'100 kg/m = 6.99 m. Therefore, a 7 meter long outer wall of 2.5 m height and 230 mm thickness will store the charge of 100 kWh.

Again referring to **figure 2,** a synthetic stone supercapacitor provided by the present invention includes matrix mortar 1, a positive electrode 2 and a negative electrode 3. The matrix mortar includes geopolymer 11, cement 12, an alkali activator 13, and one or more stone additives 14. The matrix mortar 1 contains a preset number of free ions, which can move directionally to generate electric current. The positive electrode 2 and negative electrode 3 are placed in he concrete mortar in a distance of 8 mm to each other.

The preparation method of complete synthetic stone as capacitor includes these steps, by composing these ingredients in the indicated ratio to each other:

A1) Preparing an alkaline activator consisting of potassium silicate (K2SiO3) solution with $SiO_2$ = 7.98 grams, KOH =9.21 grams and $H_2$ = 15 grams,

A2) Preparing an additive solution containing poly carboxylate ether = 0.25 gram, retarde r= 0.01 gram, lignosulfonate = 0.2 gram, ethylene-vinyl acetate = 0.2 gram, hydroxypropyl methyl cellulose = 0.1 gram and pigment = 0.5 gram, and stirring all additive in 5 grams of deionized water for 30 minutes,

A3) Sonicating 1.44 g carbon black in the with the probe in water,

A4) Adding then entire solution to fly ash and cement and gravel and sand, that is 20 grams fly ash, 25 grams of cement and 5 grams of gravel and sand, and stirring evenly,

B) Placing a positive steel electrode 2 and a negative steel electrode 3 into the rectangular mold and fixing them by a distance of 8 mm from each other,

C) Poring the prepared mortar obained in step A1 to A4 into the mold,

D) Leaving the solution stand still for obtaining a mixed solid solution.

Specifically, in step D, the mixed solution is dried for 24 hours at ambient temperatures then placed in an oven at 50°C for 24 hours. Specifically, the ordinary fly ash is a first-grade fly ash and the cement is a Portland cement type 2. The alkali activator is made of potassium hydroxide powder and silicon dioxide powder. Preferably, based on parts by mass, the alkali activator is made from 30.7 parts of potassium hydroxide powder and 26.6 parts of silicon dioxide powder. Specifically, additives are being stirred in water for 30 minutes. Preferably, carbon black is sonicated for 5 minutes with probe. Specifically, the steel electrode includes a positive steel electrode 2 and a negative steel electrode 3 that are being fixed in the mortar matrix 1. The negative electrode 3 and positive electrode 2 are being fixed in a distance of 8 mm to each other.

**Example 1:**

Hereinafter, this artificial stone capacitor is described in more detail and specifically with reference to the examples which however are not intended to limit the present invention. This stone was prepared by mixing fly ash and cement into the alkaline activator with fly ash-cement and gravel and sand, that is 20 grams fly ash, 25 grams cement and 5 gram gravel and sand. The alkaline activator does consist of potassium silicate ($K_2SiO_3$) solution with $SiO_2$ = 7.98 grams, KOH = 9.21 grams and $H_2O$ = 15 grams. In the stone combination, some additives were added such as poly carboxylate ether = 0.25 gram, retarder = 0.01 gram, lignosulfonate = 0.2 gram, ethylene-vinyl acetate = 0.2 gram, hydroxypropyl methyl cellulose = 0.1 gram and pigment = 0.5 gram and carbon black = 1.44g.

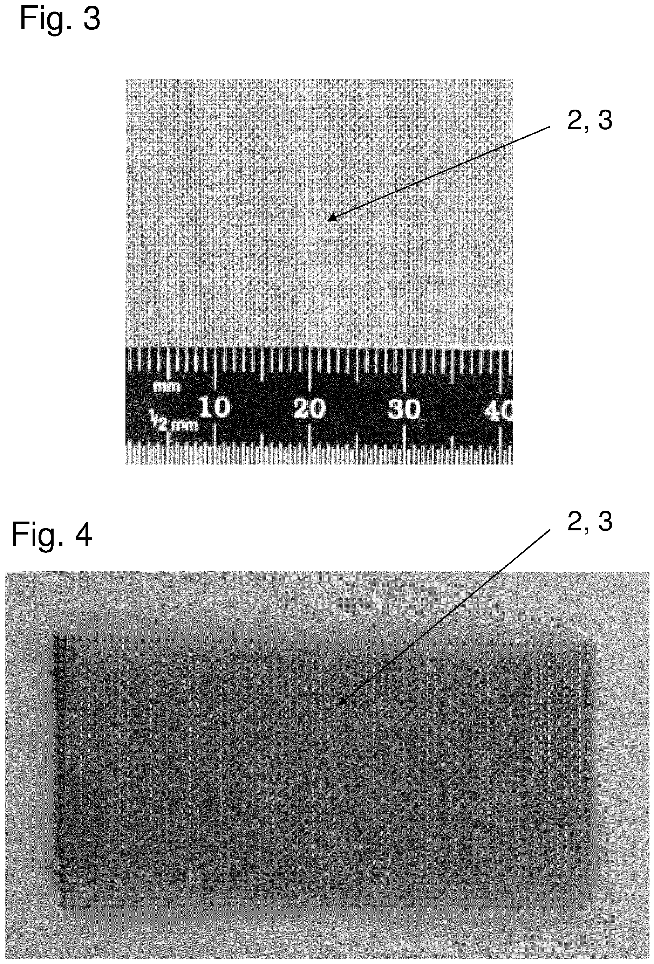

**Figure 3** does show a suitable steel mesh for the electrodes 2, 3 as such steel meshes are availblee in the marked. They have a fine mesh. The finer the mesh is woven, the more surface is provided on a particular outer dimension of the steel mesh. **Figure 4** shows another mesh type similar to the one shown in **Figure 3** and this steel mesh type was being used for the laboratory tests with the ingredients as disclosed in above section [0029].

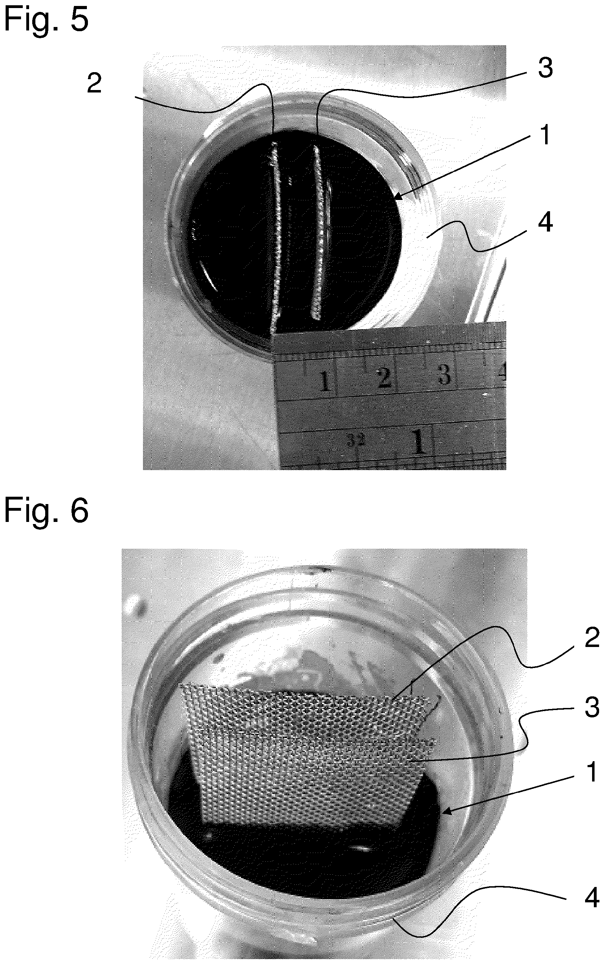

In **Figure 5** the test arrangement of the synthetic polymer stone material with electrical energy storage capacity is shown for above. The geopolymer-cement matrix 1 was put into a round container 4 and the steel mesh electrodes 2, 3 were sticked into this mass, and then the matrix was curred. In **Figure 6**, the a test arrangement of figure 5 is shown after a rotation around 90° in clockwise direction and then seen from above in a slight angle.

All additives were stirred in 5 grams of water for 30 minutes and carbon black was sonicated for 5 minutes with probe and added with alkaline solution to cement and fly ash. All component were mixed for 1 minute with a mixer. After mixing, the paste was poured into plastic molds to form the capacitor in the shape of a rectangular plastic brick. Two steel mesh electrodes 2, 3 with dimensions of 70 mm x 60 mm x 20 mm have been used. They were first washed with soap and water and acetone and then inserted into capacitor and the sample was vibrated to ensure good contact between the electrodes and the matrix. The distance between the electrodes was 8 mm. The fabricated capacitor was cured at room temperature for 24 h. Then it was cured in oven at 50 °C for 24 h in vacuum oven.

The supercapacitor of this example 1 offers a rated voltage of 1 Volt and the capacity for it was also calculated and this was 27 mF. A series of circuit operations were carried out in order to increase voltage. Three capacitors were connected in series. It can be able to charge 2 Volts in 24 hours. Also the total capacity of this capacitor was calculated to be 56 mF.

What is disclosed above is only a preferred embodiment of the present invention, which of course cannot be used to limit the scope of rights of the present invention. Therefore, equivalent changes made according to the claims of the present invention still fall within the scope of the present invention.

These synthetic stones with their capability to store electrical energy offer unique opportunities, e.g. for erecting buildings and thereby using the building for providing the capacity for intermediate storing of electrical energy and releasing electrical energy on demand. E.g. LEDs can be powered for enlighting streets and buildings. Or 4G connections and higher can be powered in remote areas. Such synthetic stones can also be used for paring with solar panels to power sensors built into concrete structures such as long bridges or highways.

## Claims

1. Synthetic stone with capability to store electrical energy, which comprises a geopolymer-cement matrix (1) as conductive mortar with microscopic pores and contains a present number of free ions, and a positive steel electrodes (2) and negative electrode (3) immersed in said electrolyte matrix of the geopolymer-cement matrix (1), hereby providing an electricity storage function, and wherein the geopolymer-cement matrix (1) is provided with microscopic pores, and it contains a preset number of free ions, which can move directionally to generate electric current.

2. Synthetic stone according to claim 1, containing as additives one or more of a selection of poly carboxylate ether, retarder, lignosulfonate, ethylene-vinyl acetate, hydroxypropyl methyl cellulose and pigment.

3. Synthetic stone according to one of the preceding claims, **characterised in that** the geopolymer-cement matrix (1) contains fly ash, cement, gravel and sand, alkali activator (KOH and $SiO_2$), poly carboxylate ether, retarder, lignosulfonate, ethylene-vinyl acetate, hydroxypropyl methyl cellulose, pigment and carbon black and at least two steel electrodes (2, 3).

4. Synthetic stone according to one of the preceding claims, where in the geopolymer-cement matrix (1) contains the following ingredients in this ratio to each other: 20 grams fly ash, 25 grams cement and 5 gram gravel and sand, further alkaline activator consisting of potassium silicate ($K_2SiO_3$) solution with $SiO_2$ = 7.98 grams, KOH = 9.21 grams and $H_2O$ = 15 grams, and additives such as poly carboxylate ether = 0.25 gram, retarder = 0.01 gram, lignosulfonate = 0.2 gram, ethylene-vinyl acetate = 0.2 gram, hydroxypropyl methyl cellulose = 0.1 gram and pigment = 0.5 gram and carbon black = 1.44g.

5. Method for manufacturing a synthetic stone according to one of the preceding claims, comprising these steps:

    A) Preparing of conductive mortar as a paste,
    B) Placing two steel electrodes in the mold,
    C) Pouring the conductive paste into the mold,
    D) Curring the conductive paste for obtaining the solid synthetic stone supercapacitor.

6. Method for manufacturing a synthetic stone according to claim 5, comprising these steps:

    A1) Preparing alkaline activator consisting of the following ingredients in the indicated ratio to each other: potassium silicate ($K_2SiO_3$) solution with $SiO_2$ = 7.98 grams, KOH = 9.21 grams and $H_2O$ = 15 grams,
    A2) Preparing an additive solution containing the following ingredients in the indicated ratio to each: poly carboxylate ether = 0.25 gram, retarder = 0.01 gram, lignosulfonate = 0.2 gram, ethylene-vinyl acetate = 0.2 gram, hydroxypropyl methyl cellulose = 0.1 gram and pigment = 0.5 gram. All additives are being stirred in 5 grams de-ionized water for 30 minutes,
    A3) 1.44 g carbon black is sonicated with probe in water in ratio to the ingredients indicated in A2,
    A4) The obtained solution is added to 20 grams of fly ash, 25 grams of cement and 5 grams of gravel and sand, then stirred evenly and then left standing quietly to obtain a mixed solution, in ratio to the ingredients indicated in A2 and A3,
    B) Placing a positive steel electrodes (2) and a negative steel electrode (3) into the rectangular mold and fixing them by a distance of 8 mm from each other,

C) Poring the prepared mortar into the mold,

D) Leaving the solution stand still at ambient temperatures and then at 50°C for 24 hours obtaining a mixed solid solution.

7. Method for manufacturing a synthetic stone according to claim 6, **characterized in that**

• in step A1, the alkali activator is made of potassium hydroxide powder and silicon dioxide powder, and based on parts by mass, the alkali activator is made from 30.7 parts of potassium hydroxide powder and 26.6 parts of silicon dioxide powder,

• in step A3, the additives are being stirred in water for 30 minutes, and carbon black is sonicated for 5 minutes with probe, and

• in step A4, the fly ash is a first-grade fly ash and the cement is a Portland cement type 2.

8. Use of a synthetic stone with capability to store electrical energy according to one of claims 1 to 4 for erecting buildings and thereby providing the capacity for intermediate storing of electrical energy and releasing electrical energy on demand.

9. Use of a synthetic stone with capability to store electrical energy according to one of claims 1 to 4 for powering lighting posts, LEDs for lighting streets and buildings, traffic lights, advertising boards, electric vehicle charging stations and structural health monitoring sensors.

10. Use of a synthetic stone with capability to store electrical energy according to one of claims 1 to 4 for powering 4G connections and higher in remote areas.

11. Use of a synthetic stone with capability to store electrical energy according to one of claims 1 to 4 by paring the synthetic stones with solar panels to power sensors built into concrete structures such as long bridges or highways.

# Fig. 1

Cathode

e⁻

e-Output

e⁻

Anode

$2NH^{+}_{4} + 2e \rightarrow 2NH_3 + H_2$

$Zn \rightarrow Zn^{2+} + 2e^{-}$

$2MnO_2 + H_2 \rightarrow Mn_2O_3 {}_{+} H_2O$

$Zn^{2+} + 4NH_3 \rightarrow [ZN(HN_3)_4]^{2+}$

Fig. 2

Fig. 3

2, 3

Fig. 4

2, 3

Fig. 5

Fig. 6

Europäisches
Patentamt

European
Patent Office

Office européen
des brevets

## EUROPEAN SEARCH REPORT

Application Number

EP 22 17 1824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/119249 A1 (LEPPÄNEN JUHA [FI] ET AL) 22 April 2021 (2021-04-22) | 1,2,5,8 | INV. H01G11/48 |
| Y | * paragraph [0016] – paragraph [0081]; claims 1-10; figures 1,4,5 * | 1,2,5, 8-11 | H01G11/02 H01G11/86 |
| A | | 3,4,6,7 | H01G11/56 H01G11/46 |
| X | CN 113 436 899 A (GUANGDONG ZHIDAO ADVANCED CIVIL ENGINEERING MATERIAL TECH RESEARCH CO) 24 September 2021 (2021-09-24) | 1,2,5,8 | C04B12/00 C04B28/00 H01G11/30 |
| Y | * paragraph [0006] – paragraph [0136]; claims 1-10; examples 1-3 * | 1,2,5, 8-11 | |
| A | | 3,4,6,7 | |
| X | CN 113 666 654 A (GUANGDONG ZHIDAO ADVANCED CIVIL ENGINEERING MATERIAL TECH RESEARCH CO) 19 November 2021 (2021-11-19) | 1,2,5,8 | |
| Y | * paragraph [0004] – paragraph [0079]; claims 1-10; examples 1,2 * | 1,2,5, 8-11 | |
| A | | 3,4,6,7 | TECHNICAL FIELDS SEARCHED (IPC) |
| X | CN 113 436 907 A (GUANGDONG ZHIDAO ADVANCED CIVIL ENGINEERING MATERIAL TECH RESEARCH CO) 24 September 2021 (2021-09-24) | 1,2,5,8 | H01G C04B |
| Y | * paragraph [0005] – paragraph [0102]; claims 1-10; figure 1 * | 1,2,5, 8-11 | |
| A | | 3,4,6,7 | |

-/--

The present search report has been drawn up for all claims

| Place of search | Date of completion of the search | Examiner |
|---|---|---|
| Munich | 2 November 2022 | Frias Rebelo, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 17 1824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | SALAMI BABATUNDE ABIODUN ET AL: "Cement-based batteries design and performance. A review", ENVIRONMENTAL CHEMISTRY LETTERS, SPRINGER INTERNATIONAL PUBLISHING, CHAM, vol. 20, no. 3, 8 February 2022 (2022-02-08), pages 1671-1694, XP037837016, ISSN: 1610-3653, DOI: 10.1007/S10311-022-01389-X [retrieved on 2022-02-08] ----- | | |
| A | MENG Q ET AL: "Battery in the form of a cement-matrix composite", CEMENT AND CONCRETE COMPOSITES, ELSEVIER APPLIED SCIENCE, BARKING, GB, vol. 32, no. 10, 17 October 2010 (2010-10-17), pages 829-839, XP027357189, ISSN: 0958-9465, DOI: 10.1016/j.cemconcomp.2010.08.009 [retrieved on 2010-09-29] * the whole document * ----- | 1-11 | |
| A | Burstein G T ET AL: "Developing a Battery using Concrete as an Electrolyte Developing a Battery Using Set Concrete as Electrolyte", ECS Transactions 3(42), 15 January 2008 (2008-01-15), pages 13-20, XP055976444, DOI: https://doi.org/10.1149/1.2838188 Retrieved from the Internet: URL:https://iopscience.iop.org/article/10.1149/1.2838188/pdf [retrieved on 2022-10-31] * the whole document * ----- | 1-11 | TECHNICAL FIELDS SEARCHED (IPC) |

The present search report has been drawn up for all claims

| Place of search | Date of completion of the search | Examiner |
|---|---|---|
| Munich | 2 November 2022 | Frias Rebelo, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 1824

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2022

| Patent document cited in search report | | Publication date | Patent family member(s) | | Publication date |
|---|---|---|---|---|---|
| US 2021119249 | A1 | 22-04-2021 | AU 2019239819 | A1 | 29-10-2020 |
| | | | EP 3769355 | A1 | 27-01-2021 |
| | | | FI 20185262 | A1 | 21-09-2019 |
| | | | US 2021119249 | A1 | 22-04-2021 |
| | | | WO 2019180312 | A1 | 26-09-2019 |
| CN 113436899 | A | 24-09-2021 | NONE | | |
| CN 113666654 | A | 19-11-2021 | NONE | | |
| CN 113436907 | A | 24-09-2021 | NONE | | |

EPO FORM P0459

For more details about this annex : see Official Journal of the European Patent Office, No. 12/82